# EUROPEAN PATENT APPLICATION

(11) **EP 2 485 081 A1**
(43) Date of publication of application: **08.08.2012**
(21) Application number: 10820551.9
(22) Date of filing: 29.09.2010
(51) Int. Cl.: G02F 1/035, G02B 6/12

(54) **OPTICAL WAVEGUIDE ELEMENT**

(30) Priority: 30.09.2009 JP 2009228292
(71) Applicant: Sumitomo Osaka Cement Co., Ltd., Tokyo 102-8465 (JP)
(72) Inventor: KONDOU Katsutoshi, Tokyo 102-8465 (JP)
(74) Representative: Staudt, Hans-Peter
(86) International application number: PCT/JP2010/066904
(87) International publication number: WO 2011/040436

(57) **Abstract**

Disclosed is an optical waveguide element wherein a plurality of Mach-Zehnder waveguides to be used for DQPSK modulation and the like are integrated on a thin substrate and the on/off extinction ratio is improved. The optical waveguide element has the thin board, which is formed of a material having electrooptical effects and has a thickness of 20 µm or less, and an optical waveguide formed on the front surface or the rear surface of the thin board. The optical waveguide has the plurality of Mach-Zehnder waveguide sections, and multiplexes optical waves outputted from two or more Mach-Zehnder waveguide sections. In the multiplexing section in each Mach-Zehnder waveguide section (MZA), a triply branched waveguide, which is composed of a waveguide for output (c1) and two waveguides for radiation (b1, b2) disposed to sandwich the waveguide for output, is formed. High-order mode light absorption regions (d1, d2) are formed between the waveguide for output and the waveguides for radiation in the triply branched waveguide.

## Description

### BACKGROUND OF THE INVENTION

### Field of the Invention

The invention relates to an optical waveguide device used in optical communication or optical information processing, and more particularly, to an optical waveguide device obtained by integrating a plurality of Mach-Zehnder waveguides used in DQPSK modulation, and the like on a thin substrate.

### Description of Related Art

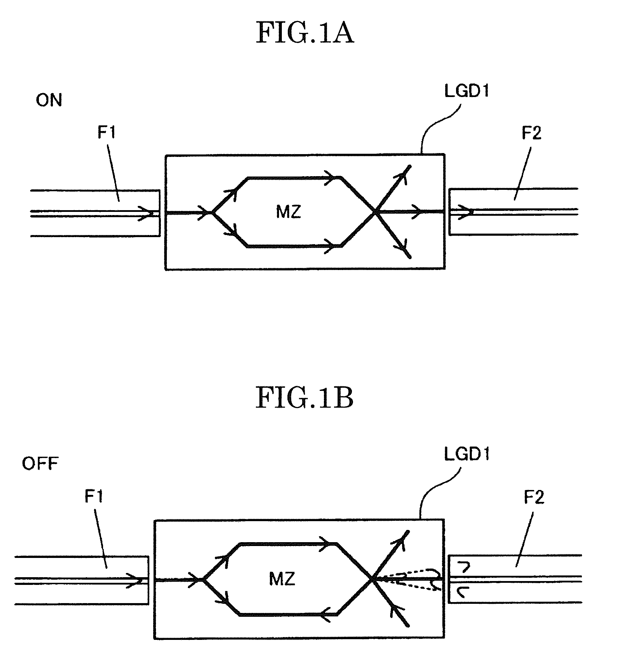

The conventional optical modulator obtained by forming an optical waveguide on a substrate made of lithium niobate (LN) and the like has a structure having a Mach-Zehnder (MZ) waveguide configuration as shown in Fig. 1 and has been mainly used in intensity modulation. The optical modulator having an MZ structure includes a modulation electrode arranged along the MZ waveguide and controls on/off states of light depending on the voltage applied to the modulation electrode.

Specifically, itbecomespossibletoswitchtheon/offstate of light by controlling a fundamental mode or an excitation mode based on that an output waveguide of the MZ waveguide is a single-mode waveguide or that the propagation speed of the light changes depending on the applied voltage.

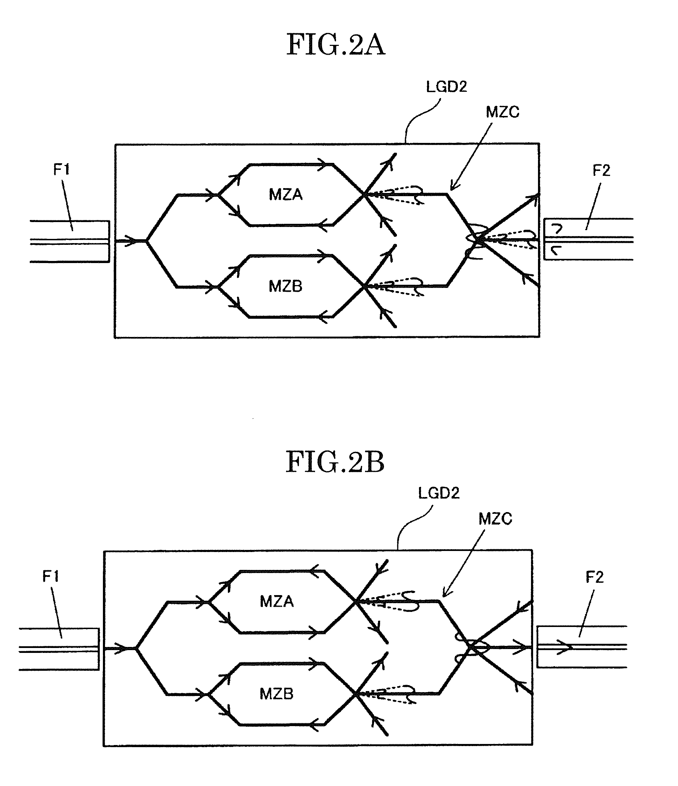

In recent years, a technique of modulating intensity/phase using a tandem type modulator, and the like has become mainstream. It is necessary to arrange a plurality of MZ waveguides to manipulate the intensity/phase. For example, as shown in Figs. 2A and 2B, the tandem type modulator is structured by arranging a plurality of MZ waveguides in parallel.

Meanwhile, a technique of thinning the LN substrate has been examined/disclosed for the LN modulator having a wide frequency range and is driven at a low driving voltage (refer to J. Kondo et al., "40 Gbit/s Single-Drive Thin Sheet X-cut LiNBO3 Optical Modulator With low Driving-Voltage of 2 Vibrator, " OFC `04, FL4 (2004)) . In addition, phase modulation, prechirping, miniaturization, and the like using such a thin-plate technique have been also examined/disclosed (refer to Kenji Aoki, et al., "Low Drive Voltage X-cut LiNbO3 Thin-plate Type Phase Modulator, " 2007 IEICE Society Conference, Volume C-3-67 (2007), Kenji Aoki, et al. , "Pre-chirp X-cut LiNbO3 Thin-plate Type Optical Modulator Using Asymmetric CPW Electrode," 2004 IEICE Electronics Society Conference, Volume C-3-103(2004), and Kenji Aoki, et al., "High-speed Miniaturized LiNbO3 Thin-plate Type Optical Modulator Using Return Optical Waveguide").

The MZ optical modulator using the thin-plate is characterized in that the LN substrate functions as a slab waveguide. Therefore, there is an area at which the on-light and the off-light are overlapped due to horizontal radiation of the off-light of the MZ waveguide along the waveguide. As a result, there was a difficulty in that the on/off extinction ratio of the LN modulator is deteriorated.

However, as disclosed in Japanese Unexamined Patent Application Publication No. 2006-301612, a technique has been proposed, in which a triply branched structure is formed by an output waveguide and radiation-light waveguides arranged to interpose the output waveguide therebetween in the coupling portion within the MZ waveguide. Using this configuration, most of the off-light is guided to the radiation-light waveguides, and it is possible to separate the on-light and the off-light to some extent.

In addition, since the remaining radiation light component in the vicinity of the output waveguide is removed/relieved by the connection between a single mode fiber and a chip which configures the optical modulator, it is possible to improve the on/off extinction ratio to an extent that does not generate a problem in commercial use.

As disclosed in Patent Document 1, in the method of forming a slab area aside of the output waveguide instead of the radiation light waveguide, it is necessary to reduce the gap between the output waveguide and the slab area and lengthen the slab area along the output waveguide in order to separate the on-light and the off-light. As a result, it also has an inherent disadvantage in that the wavelength dependence of the insertion loss increases.

The DQPSK (Differential Quadrature Phase Shift Keying) optical modulator has a tandem type structure as shown in Figs. 2A and 2B. In addition, it is possible to provide a broadband and a low driving voltage of the DQPSK modulator by employing a thin-plate structure.

However, as shown in Figs. 2A and 2B, when the MZ waveguide (MZA or MZB) has the off state, the remaining radiation light is introduced to the coupling portion of, particularly, the MZ waveguide (MZC) obtained by connecting two MZ waveguides (MZA and MZB) in parallel and generates interference. As a result, the applied voltage may change the extinction ratio. This is likely to occur when the MZ waveguide is integrated with a thin-plate structure. It is difficult to address this problem using the triply branched structure disclosed in Japanese Unexamined Patent Application Publication No. 2006-301612.

### SUMMARY OF THE INVENTION

The present invention has been made to address the aforementioned problems and provide an optical waveguide device having an improved on/off extinction ratio in an optical waveguide device obtained by integrating a plurality of Mach-Zehnder waveguides used in DQPSK modulator, and the like on a thin substrate.

In order to address the aforementioned problems, according to a first aspect of the invention, there is provided an optical waveguide device including: a thin-plate which is formed of a material having electrooptical effects and has a thickness of 20 µm or less and an optical waveguide formed on a front surface or a rear surface of the thin-plate, wherein the optical waveguide includes a plurality of Mach-Zehnder waveguide portions and has a configuration for coupling optical waves output from at least two or more Mach-Zehnder waveguide portions, a coupling portion within the Mach-Zehnder waveguide portion is provided with a triply branched waveguide including an output waveguide and two radiation light waveguides arranged to interpose the output waveguide, and a high-order mode light absorption area is formed between the output waveguide and the radiation light waveguides of the triply branched waveguide.

According to a second aspect of the invention, in the optical waveguide device described in the first aspect, the high-order mode light absorption area is a slab waveguide or a metal film.

According to a third aspect of the invention, in the optical waveguide device described in the second aspect, the length of the slab waveguide along the output waveguide is equal to or smaller than 0.5 mm, and the gap between the slab waveguide and the output waveguide is equal to or larger than 8 **µ**m.

According to a fourth aspect of the invention, in the optical waveguide device described in the second aspect, the gap between the metal film and the output waveguide is equal to or smaller than 15 **µ**m.

The optical waveguide device according to the first aspect of the present invention includes a thin-plate which is formed of a material having electrooptical effects and has a thickness equal to or smaller than 20 **µ**m and an optical waveguide formed on a front surface or a rear surface of the thin-plate, wherein the optical waveguide includes a plurality of Mach-Zehnder waveguide portions and couples optical waves output from at least two or more Mach-Zehnder waveguide portions, a coupling portion within the Mach-Zehnder waveguide portion is provided with a triply branched waveguide including an output waveguide and two radiation light waveguides arranged to interpose the output waveguide, and a high-order mode light absorption area is formed between the output waveguide and the radiation light waveguides of the triply branched wave guides. Therefore, itisalsopossible to remove the remaining radiation light which was not separated from the triply branched waveguide in the high-order mode light absorption area. In addition, as the fundamental mode light propagating through the output waveguide is rarely absorbed by the high-order mode light absorption area, it is possible to improve the on/off extinction ratio.

According to the second aspect of the invention, the high-order mode light absorption area is any one of a slab waveguide or a metal film. Therefore, it is possible to not only effectively remove the remaining radiation light by absorbing the high-order mode light, but also easily form the high-order mode light absorption area using the process of manufacturing the optical waveguide or the process of manufacturing the modulation electrode, or the like in the optical waveguide device.

According to the third aspect of the invention, the length along the output waveguide of the slab waveguide is equal to or smaller than 0.5 mm, and the gap between the slab waveguide and the output waveguide is equal to or larger than 8 **µ**m. Therefore, it is possible to effectively absorb the high-order mode light with suppressing absorption of the fundamental mode light propagating through the output waveguide. In addition, since the length of the slab waveguide is short, the wavelength dependency is not deteriorated.

According to the fourth aspect of the invention, the gap between the metal film and the output waveguide is equal to or smaller than 15 **µ**m. Therefore, it is possible to effectively absorb the high-order mode light. Also, since such electrodes are arranged in the vicinity of the optical waveguide when the metal film is used as the signal electrode or the ground electrode, it is possible to effectively apply the necessary electric field, and this contributes to a reduction in the driving voltage.

### BRIEF DESCRIPTION OF THE DRAWINGS

Figs. 1A and 1B are diagrams illustrating an on/off state in an optical waveguide device obtained by using a single Mach-Zehnder waveguide;
Figs. 2A and 2B are diagrams illustrating a propagation state of optical waves of two types of off-states in a tandem type structure in which two Mach-Zehnder waveguides are stacked in parallel;
Fig. 3 is a diagram illustrating a case where a slab waveguide is used as a high-order mode light absorption area in the optical waveguide device of the invention;
Fig. 4 is a diagram illustrating a case where a metal film is used as a high-order mode light absorption area in the optical waveguide device of the invention;
Fig. 5 is a diagram illustrating simulation model for a propagation loss between fundamental mode light and radiation light;
Figs. 6A and 6B are graphs illustrating a result of simulation for attenuation amounts of the fundamental mode light (on-light) and the high-order mode light (off-light), in which Fig. 6A illustrates a case where the slab waveguide is used, and Fig. 6B illustrates a case where a metal film is used;
Fig. 7 is a graph illustrating a difference of the modulation curve depending on presence/absence of the high-order mode light absorption area.

### DETAILED DESCRIPTION OF THE INVENTION

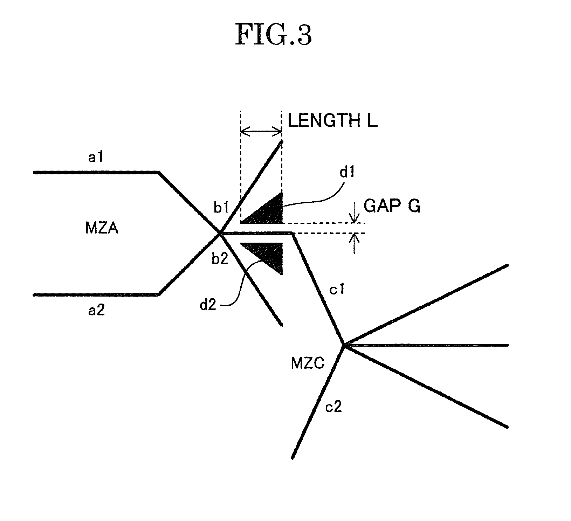

Hereinafter, an optical waveguide device according to the present invention will be described in detail by focusing on preferable embodiments.
As shown in Fig. 3, the optical waveguide device according to the present invention includes a thin-plate which is formed of a material having electrooptical effects and has a thickness equal to or smaller than 20 **µ**m and an optical waveguide formed on a front surface or a rear surface of the thin-plate, wherein the optical waveguide includes a plurality of Mach-Zehnder waveguide portions and combines optical waves output from at least two or more Mach-Zehnder waveguide portions, a coupling portion within the Mach-Zehnder waveguide portion (MZA) is provided with a triply branched waveguide including an output waveguide (c1) and two radiation light waveguides (b1, b2) arranged to interpose the output waveguide, and a high-order mode light absorption area (d1, d2) is formed between the output waveguide and the radiation light waveguide of the triply branched waveguides.

The material having electrooptical effects may include, for example, lithium niobate, lithium tantalite, lead lanthanum zirconate titanate (PLZT), a quartz-based material, and a combination thereof. Particularly, lithium niobate (LN) crystals having high electrooptical effects are preferably used.

The method of forming the optical waveguide may include diffusing Ti, and the like on a substrate surface using a thermal diffusion method or a proton-exchange method, and the like. In addition, it is possible to use a ridge-shaped waveguide in which a part corresponding to the optical waveguide on the substrate is formed in a convex shape by etching the substrate except for the optical waveguide, forming the groove at both sides of the optical waveguide, and the like.

In the optical waveguide device such as the optical modulator, the modulation electrode such as a signal electrode or a ground electrode is formed on the substrate. Such electrodes may be formed using a method of forming a Ti or Au electrode pattern, a method of plating gold, and the like. In addition, a buffer layer made of a dielectric material such as SiO₂ may be provided as necessary on the substrate surface after the optical waveguide is formed, and a modulation electrode may be formed on the buffer layer.

In the method of manufacturing the thin-plate including the optical modulation device, the aforementioned optical waveguide or the modulation electrode is formed on the substrate having a thickness of several hundreds of micrometers, and the rear surface of the substrate is polished, for example, finished to a thickness equal to or smaller than 20 **µ**m. The formation of the optical waveguide, the modulation electrode, or the like may be performed after the thin-plate is formed. However, there is also a risk of damage to the thin-plate if a thermal shock is applied when the optical waveguide is formed, or a mechanical impact is applied when the thin-film is handled during various processes. Therefore, it is preferable to polish the rear surface of the substrate after the optical waveguide or the modulation electrode is formed.

As the mechanical strength of the entire element decreases in a case where the substrate is thinned, a reinforcing plate is bonded to the substrate. As a material used in the reinforcing plate, various materials may be used. For example, in addition to the same material as that of the thin-plate, a material having a dielectric constant lower than that of the thin-plate, such as quartz, glass, and alumina or a material having a crystal orientation different from that the thin-plate may be used. However, it is preferable that a material having the same linear expansion coefficient as that of the thin-plate be selected to stabilize the modulation characteristic of the optical modulator against the temperature variation. If it is difficult to select an equivalent material, a material having the same linear expansion coefficient as that of thin-plate is selected as an adhesive for connecting the thin-plate and the reinforcing plate.

The adhesive for bonding between the thin-plate and the reinforcing plate may include a variety of adhesive materials such as an epoxy adhesive, a thermosetting adhesive, an ultraviolet curable adhesive, solder glass, and a thermosetting, photocurable, or light-thickening resin adhesive sheet. In addition, the thin-plate and the reinforcing plate may be directly bonded by using a direct bonding method without the adhesive.

As shown in Fig. 3, the optical waveguide device according to the present invention is characterized in that a triply branched waveguide of an output waveguide c1 and radiation light waveguides b1 and b2 are formed in the coupling portion of the Mach-Zehnder waveguide, and high-order mode light absorption areas (d1, d2) are formed between the output waveguide and the radiation light waveguide. It is possible to remove the remaining radiation light which was difficult to separate with the triply branched waveguide, by using the high-order mode light absorption area. In addition, since most of the fundamental mode light propagating through the output waveguide C1 is not absorbed by the high-order mode light absorption area, it is possible to improve the on/off extinction ratio.

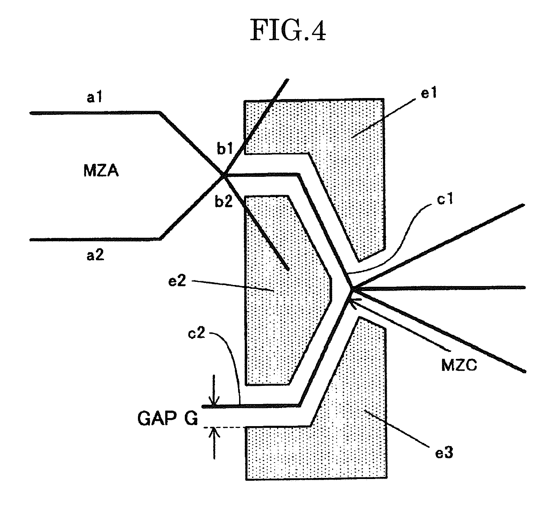

The high-order mode light absorption area may be formed of a slab waveguide as shown in Fig. 3 or may be formed of a metal film as shown in Fig. 4. In addition, if the high-order mode light absorption area is formed of the metal film as shown in Fig. 4, it is possible to share a part of the signal electrode or the ground electrode.

In the method of forming the slab waveguide of Fig. 3, basically, a refractive index of the area for forming the slab waveguide may be higher than that of the substrate. For example, the slab waveguide may be formed by doping impurities such as Ti and Zn using the thermal diffusion method or the proton-exchange method, or the like onto the substrate. Since such a method can be performed in the same process as that for forming the optical waveguide, such a method may be performed simultaneously with formation of the optical waveguide. In addition, a convex portion corresponding to the slab waveguide may be formed on the substrate as in the ridge-shaped waveguide described above.

As shown in Fig. 3, it is preferable that the length L of the slab waveguide along the output waveguide be equal to or smaller than 0.5 mm, and the gap G between the slab waveguide and the output waveguide be equal to or larger than 8 **µ**m. Particularly, it is possible to suppress deterioration of the wavelength dependency by shortening the length L. In addition, by adjusting the gap G, it is possible to effectively absorb the high-order mode light while absorption of the fundamental mode light propagating through the output waveguide is suppressed as described below.

As the method of forming the metal film of Fig. 4, metal such as Al, Au, Ti, and amorphous Si may be coated on the substrate surface through vapor deposition, sputtering, or the like. In addition, when the aforementionedmodulation electrode is formed, a metal film may be formed using the same material as that of the electrode at the same time.

As shown in Fig. 4, it is preferable that the gap between the metal films e1 to e3 and the output waveguides C1 and C2 be equal to or smaller than 15 **µ**m as described below. As a result, it is possible to effectively absorb the high-order mode light. In addition, since the electrode is arranged in the vicinity of the optical waveguide in a case where the metal film is used as the signal electrode or the ground electrode, it is possible to effectively apply the necessary electric field, and this contributes to a reduction in the drive voltage.

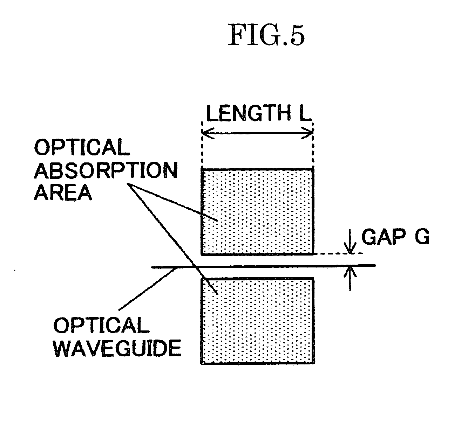

Next, a preferable numerical range will be examined regarding the gap G between the high-order mode light absorption area and the output waveguide or the length L along the output waveguide of the high-order mode light absorption area. As shown in Fig. 5, the high-order mode light absorption areas are arranged on both sides such that the optical waveguide is interposed, and the propagation losses in the fundamental mode light and the radiation light (high-order mode light) propagating through the optical waveguide were simulated.

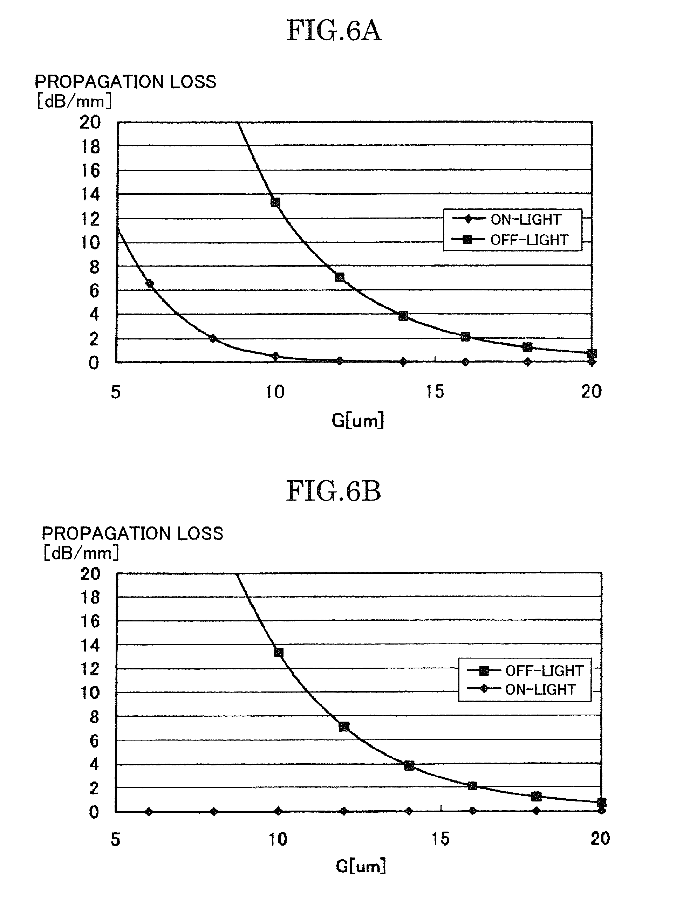

Assuming that the high-order mode light absorption area is formed of the slab waveguide, there occurs another problem in that the wavelength dependency of the insertion loss increases as the length L increases. Therefore, it is necessary to set the length L to 0.5 mm or less in order to prevent the deterioration of the wavelength characteristics. As shown in the graph of Fig. 6A with respect to the gap G, the propagation loss of the high-order mode light increases as the gap G decreases. It is understood that the absorption efficiency of the high-order mode light increases due to the slab waveguide. However, the propagation loss of the fundamental mode light also increases if the gap G is too small. Therefore, it is preferable that the gap G be set to 8 **µ**m or more. As a result, it is possible to suppress the propagation loss of the fundamental mode light to be equal to or less than 2 dB/mm. In order to increase the propagation loss of the high-order mode light to be equal to or higher than 3 dB/mm, the gap G is preferably set to 15 **µ**m or less.

If the high-order mode light absorption area is formed of a metal film, as shown in the graph of Fig. 6B, the simulation shows that the fundamental mode light is not affected by the gap G, and the propagation loss increases only in the high-order mode light as the gap G decreases. It is preferable that the gap G be set to 15 **µ**m or less if the propagation loss of the high-order mode light is higher than 3 dB/mm. In addition, as shown in Fig. 4, if the metal film takes charge of a part of the ground electrode or the signal electrode of the modulation electrode, the length L of the metal film is set to approximately 1 cm. In the model simulation, the length L is set to 1 cm.

In order to confirm the effects of the optical waveguide device according to the present invention, the optical modulator with a tandem structure was formed as shown in Figs. 2A and 2B, and the change of the output light intensity (modulation curve) was examined by changing the voltage applied to the modulation electrode. However, in the optical waveguide device according to the present invention, the triply branched waveguide was formed in the coupling portion of the MZ waveguide, and the high-order mode absorption area was formed in the slab waveguide of Fig. 3. In a comparison example, an optical waveguide device having a structure similar to that of the present invention was manufactured except that the slab waveguide is not provided.

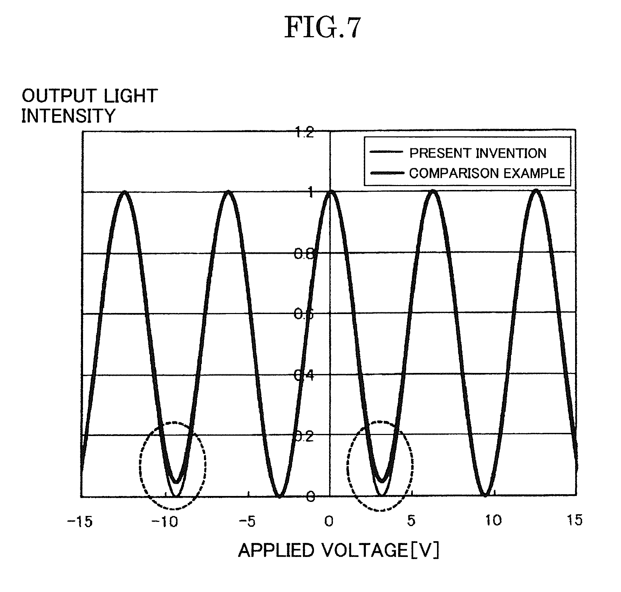

As an evaluation method, a voltage was applied to the MZ waveguide (MZB) as shown in Figs. 2A and 2B, and a turn-off state was made. Then, a voltage is applied to the MZ waveguide (MZA), and the amount of light output from the tandem type optical modulator was measured. The graph of Fig. 7 illustrates a relationship between the voltage applied to the MZ waveguide (MZA) and the output light intensity (amount of light).

In the comparison example, since two kinds of the off-states are alternately generated by the applied voltage in the off-state of the MZ waveguide (MZA) as shown in Figs. 2A and 2B, the on/off extinction ratio is alternately changed, and the extinction ratio is deteriorated. On the other hand, in the optical waveguide device according to the present invention, since the off-light (high-order mode light) is not introduced into the coupling portion of the MZ waveguide (MZC) of the rear stage, the extinction ratio is not deteriorated.

### Industrial Applicability

According to the present invention, as described above, it is possible to provide an optical waveguide device obtained by integrating a plurality of Mach-Zehnder waveguides used in DQPSK modulation on the thin substrate, in which the on/off extinction ratio is improved.

## Claims

1. An optical waveguide device comprising:
a thin-plate which is formed of a material having electrooptical effects and has a thickness equal to or smaller than 20 **µ**m; and
an optical waveguide formed on a front surface or a rear surface of the thin-plate,
wherein the optical waveguide includes a plurality of Mach-Zehnder waveguide portions and a configuration for coupling optical waves output from at least two or more Mach-Zehnder waveguide portions,
a coupling portion within the Mach-Zehnder waveguide portion is provided with a triply branched waveguide including an output waveguide and two radiation light waveguides arranged to interpose the output waveguide, and
a high-order mode light absorption area is formed between the output waveguide and the radiation light waveguides of the triply branched waveguides.

2. The optical waveguide device according to claim 1, wherein the high-order mode light absorption area is a slab waveguide or a metal film.

3. The optical waveguide device according to claim 2, wherein a length of the slab waveguide along the output waveguide is equal to or smaller than 0.5 mm, and a gap between the slab waveguide and the output waveguide is equal to or larger than 8 **µ**m.

4. The optical waveguide device according to claim 2, wherein a gap between the metal film and the output waveguide is equal to or smaller than 15 **µ**m.
